# EUROPEAN PATENT APPLICATION

(11) **EP 4 528 571 A1**
(43) Date of publication of application: **26.03.2025**
(21) Application number: 23812207.1
(22) Date of filing: 26.05.2023
(51) Int. Cl.: G06F 30/20, G06F 30/12, G06N 3/12, G06F 9/38, G06F 111/04, G06F 111/06, G06F 113/12, G06F 119/22

(54) **CLUSTERING-BASED PATTERN NESTING METHOD AND DEVICE**

(30) Priority: 27.05.2022 KR 20220065655; 31.05.2022 KR 20220066445
(71) Applicant: CLO Virtual Fashion Inc., Seoul 06236 (KR)
(72) Inventor: KIM, Jae Ho, Seoul 06236 (KR); KIM, Ki Seop, Seoul 06236 (KR)
(74) Representative: Gill Jennings & Every LLP
(86) International application number: PCT/KR2023/007302
(87) International publication number: WO 2023/229433

(57) **Abstract**

A pattern nesting method according to one embodiment may comprise the steps of: generating a pattern pair in which the location relationship between at least two patterns is determined so that relative locations of at least two patterns from among a plurality of patterns satisfy predetermined conditions; clustering the plurality of patterns on the basis of size information about each of the plurality of patterns; and nesting, on the basis of the pattern pair and a genetic algorithm, onto a fabric, at least one pattern included in each of the plurality of clusters generated on the basis of the clustering result.

## Description

### TECHNICAL FIELD

The following description relates to a method and device for pattern nesting.

### BACKGROUND ART

Pattern nesting is concerned with a method of arranging a plurality of patterns on a fabric on which a pattern is to be arranged. The goal of pattern nesting may be to maximize fabric utilization. This is because the size of areas of wasted fabric may change depending on how the plurality of patterns is arranged on the fabric. Since this is an issue directly related to the amount of fabric required to produce a garment, pattern nesting may be an important technique for reducing costs.

Due to the development of computing technology and pattern nesting algorithms, there is an active trend of research and technology development for computing devices to automatically perform pattern nesting through simulation programs.

The above description has been possessed or acquired by the inventor(s) in the course of conceiving the present disclosure and is not necessarily an art publicly known before the present application is filed.

### SUMMARY

According to an embodiment, a pattern nesting method using clustering includes generating a pattern pair in which a positional relationship between at least two patterns among a plurality of patterns is determined such that relative positions of the at least two patterns satisfy a predetermined condition, clustering the plurality of patterns based on size information of each of the plurality of patterns, and nesting, into fabric, at least one pattern included in each of a plurality of clusters generated based on a result of the clustering , based on the pattern pair and a genetic algorithm.

The predetermined condition may include a condition in which the at least two patterns do not overlap each other and are all included in the fabric.

The generating of the pattern pair may include generating candidate positions of a second pattern with respect to a first pattern included in the pattern pair, calculating distances of the first pattern and the second pattern with respect to a position of the first pattern and the candidate positions of the second pattern, determining a candidate position of the second pattern having a minimum value among the calculated distances as a relative position with respect to the first pattern, and generating the pattern pair with respect to the determined relative position of the second pattern.

The size information may include at least one of values of a sum of a height and a width of a bounding box of each of the patterns and areas of a bounding box of each of the patterns.

The clustering may include aligning the plurality of patterns based on the size information and clustering patterns starting from larger sizes among the aligned patterns according to the size information.

The clustering may include arranging, to the fabric, at least one pattern having a fixed position on the fabric and clustering the plurality of patterns, excluding the at least one pattern having a fixed position on the fabric among the plurality of patterns.

The nesting into the fabric may include aligning the clusters in order of sizes of patterns included in a cluster among the plurality of clusters, and performing nesting in a cluster unit based on a result of the aligning and nesting the at least one pattern included in a cluster in an area corresponding to the cluster.

The genetic algorithm may include an algorithm of determining an order in which the at least one pattern included in a cluster is arranged in an area corresponding to each of the plurality of clusters.

The pattern nesting method may further include preprocessing for reducing mesh complexity of each of the plurality of patterns.

The preprocessing for reducing the mesh complexity may include transforming an outline corresponding to each of the patterns and triangulating polygons included in a pattern in which the outline is transformed.

The transforming of the outline may include, when a pattern becomes smaller due to transformation of the outline, transforming the outline based on whether an amount of change in the pattern exceeds a threshold value.

The transforming of the outline may include, when a plurality of continuous outlines is integrated into one line, determining the line as an outline based on whether an amount of change in an area of the pattern exceeds a threshold value.

The nesting into the fabric may include generating candidate positions of a pattern to be arranged based on a plurality of candidate pattern arrangement orders generated by the genetic algorithm, arranging the pattern to be arranged, based on whether patterns overlap each other and a position determination standard among the candidate positions, and calculating an evaluation score for each of the plurality of candidate pattern arrangement orders based on a result of the arrangement.

Whether the patterns overlap each other may include at least one of whether preprocessed patterns determined by a processor overlap each other, wherein the preprocessed patterns include triangulated patterns, and whether the patterns overlap each other that is determined based on a pixel unit using an auxiliary processor.

The evaluation score may be determined inversely proportional to a length of one side of a bounding box including patterns arranged on the fabric.

The nesting into the fabric may include, after changing a selvage angle of at least one pattern to arrange the at least one pattern on the fabric, generating candidate pattern arrangements by arranging the patterns on the fabric and nesting on the fabric based on an evaluation score corresponding to each of the candidate pattern arrangements.

The changing of the selvage angle of the at least one pattern may include arranging by rotating the selvage angle of the at least one pattern by 180 degrees.

A simulation device for performing pattern nesting includes a user interface, a memory, and a processor, wherein the processor may be configured to generate a pattern pair in which a positional relationship between at least two patterns among a plurality of patterns is determined such that relative positions of the at least two patterns satisfy a predetermined condition, cluster the plurality of patterns based on size information of each of the plurality of patterns, and nest, into fabric, at least one pattern included in each of a plurality of clusters generated based on a result of the clustering, based on the pattern pair and a genetic algorithm.

According to an aspect, by additionally using a graphics processing unit (GPU), which is an auxiliary processor, in addition to a central processing unit (CPU), which is a processor, pattern nesting time may be shortened and accordingly, there may be no limit to the number of patterns that are a target of pattern nesting.

According to an aspect, by using a pattern nesting method of the present disclosure, other patterns may be nested while fixing a position of a particular pattern.

According to an aspect, by using a pattern nesting method of the present disclosure, other patterns may be nested while adjusting a rotatable selvage angle for each pattern.

According to an aspect, a pattern nesting method of the present disclosure may improve accuracy of pattern nesting by setting the size of a pattern to be the same as the size of an original.

### BRIEF DESCRIPTION OF DRAWINGS

FIG. 1 is a flowchart illustrating a pattern nesting method according to an embodiment.
FIG. 2 is a diagram illustrating a method of determining whether an outline of a pattern is transformed based on the amount of change in the pattern, according to an embodiment.
FIG. 3 is a diagram illustrating a method of transforming an outline of a pattern, according to an embodiment.
FIG. 4 is a diagram illustrating a method of generating a pattern pair, according to an embodiment.
FIG. 5 is a diagram illustrating a pattern nesting method using a genetic algorithm, according to an embodiment.
FIG. 6 is a diagram illustrating a pattern arrangement method according to an embodiment.
FIGS. 7A and 7B are diagrams illustrating a user interface screen for pattern nesting, according to an embodiment.
FIG. 8 is a diagram illustrating a pattern nesting result according to a change in a selvage angle of a pattern, according to an embodiment.
FIG. 9 is a block diagram illustrating a simulation device according to various embodiments.

### DETAILED DESCRIPTION

The following structural or functional descriptions are exemplary to merely describe the embodiments, and the scope of the embodiments is not limited to the descriptions provided in the present specification.

Although terms such as "first" or "second" are used to explain various components, the components are not limited to the terms. These terms should be used only to distinguish one component from another component. For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more of other features, integers, steps, operations, elements, components, and/or groups thereof.

Unless otherwise defined, all terms, including technical and scientific terms, used herein have the same meaning as commonly understood by one of ordinary skill in the art to which the present disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, embodiments will be described in detail with reference to the accompanying drawings. In the drawings, like reference numerals are used for like elements.

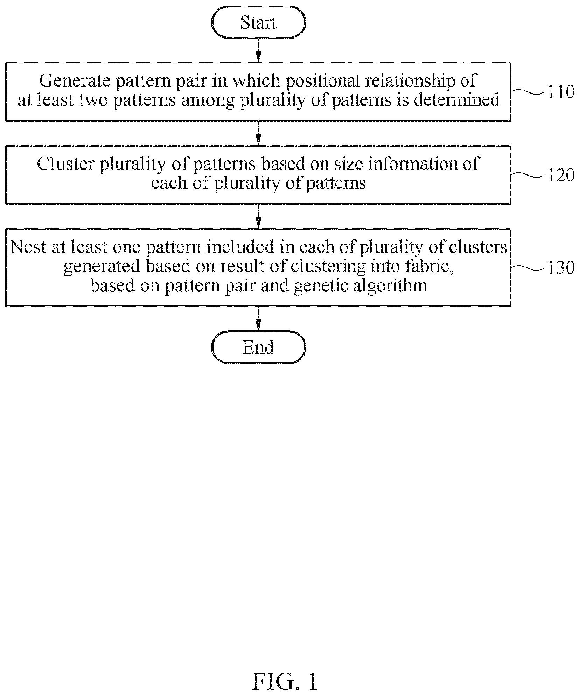

FIG. 1 is a flowchart illustrating a pattern nesting method according to an embodiment.

There may be a plurality of patterns that is a target of pattern nesting. For example, there may be more than "700" patterns that are the target of pattern nesting. The more patterns there are to be the target of pattern nesting, the more operations there may be. Therefore, in order to perform pattern nesting for many patterns, a method of reducing mesh complexity included in the patterns and nesting the patterns efficiently may be required.

Hereinafter, a detailed description of an efficient pattern nesting method is provided.

A processor 930 according to an embodiment may generate a pattern pair in which a positional relationship of at least two patterns among a plurality of patterns is determined, in operation 110. The processor 930 according to an embodiment may generate a pattern pair in which a positional relationship between at least two patterns among a plurality of patterns is determined such that relative positions of the at least two patterns satisfy a predetermined condition. The processor 930 may predetermine the positional relationship between the at least two patterns. For example, the position of a pattern B with respect to a pattern A may be to the right of the pattern A. By pre-generating a pattern pair in which the positional relationship is predetermined, the amount of computations required to determine an optimal pattern arrangement position may be reduced when arranging the patterns according to a pattern arrangement order. For example, when the pattern A, the pattern B, and a pattern C are sequentially arranged on fabric, after arranging the pattern A, the processor 930 may determine the position of the pattern B with respect to the pattern A. In this case, there may be a plurality of candidate positions with respect to the pattern A, and the processor 930 may need to determine whether each candidate position satisfies a predetermined condition. However, when a pattern pair of the pattern A and the pattern B is determined in advance, the processor 930 may not need to repeatedly calculate and determine the positional relationship of the pattern A and the pattern B each time a nesting simulation is performed but only needs to arrange the pattern B at a predetermined position with respect to the pattern A. Accordingly, the amount of calculations of the processor 930 may be significantly reduced. The predetermined condition may include a condition that patterns do not overlap each other within the fabric. The predetermined condition may include a condition in which at least two patterns do not overlap each other and may all be included in the fabric.

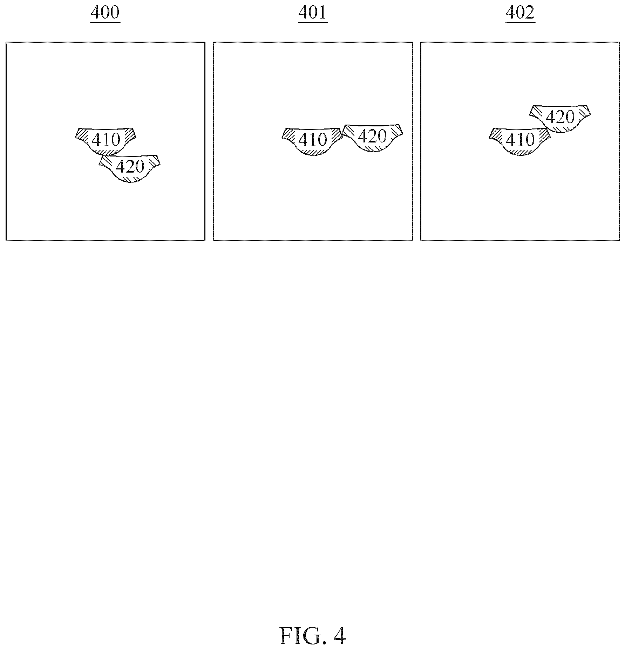

The processor 930 according to an embodiment may generate a pattern pair through the following operations. The processor 930 according to an embodiment may generate candidate positions of a second pattern with respect to a first pattern included in the pattern pair. For example, referring to FIG. 4, there may be a positional relationship 1 400 in which a second pattern 420 is positioned at the lower right of a first pattern 410, a positional relationship 2 401 in which the second pattern 420 is positioned at the right of the first pattern 410, or a positional relationship 3 402 in which the second pattern 420 is positioned at the upper right of the first pattern 410. **In** **FIG.** 4, only a portion of candidate positions of the second pattern is shown, and there may be other candidate positions. According to an embodiment, the processor 930 may arrange the second pattern at a candidate position where the amount of fabric used is minimized by arranging the second pattern with respect to the first pattern. Alternatively, the processor 930 according to an embodiment may calculate distances between the first pattern and the second pattern with respect to the position of the first pattern and the candidate positions of the second pattern. For example, the processor 930 may calculate a distance between the first pattern 410 and the second pattern 420 in the positional relationship 1 400, a distance between the first pattern 410 and the second pattern 420 in the positional relationship 2 401, or a distance between the first pattern 410 and the second pattern 420 in the positional relationship 3 402. According to an embodiment, the processor 930 may determine the candidate position of the second pattern having a minimum value among the calculated distances as a relative position with respect to the first pattern. **In** the present disclosure, the distance between the first pattern and the second pattern may be variously defined. For example, the distance may be the difference in x-axis coordinates between the first pattern and the second pattern, the difference in y-axis coordinates between the first pattern and the second pattern, or the Euclidean distance between the first pattern and the second pattern. A reference point of a pattern to calculate the distance may be a point inside the pattern or a point on an outline of the pattern. The processor 930 according to an embodiment may generate a pattern pair with respect to the relative position of the determined second pattern 420. This is because when the relative position of the second pattern 420 is determined with respect to the first pattern 410, the positional relationship between the first pattern 410 and the second pattern 420 may be determined.

The processor 930 according to an embodiment may cluster the plurality of patterns based on size information of each of the plurality of patterns, in operation 120. The size information may include information related to the size of the pattern. The size information may include at least one of an area of a bounding box of each pattern, a height of the bounding box, a width of the bounding box, and the sum of the height and the width of the bounding box. The processor 930 may align the plurality of patterns in size order using the size information. When aligning patterns, the processor 930 may use one of the area of the bounding box, the height of the bounding box, the width of the bounding box, or the sum of the height and the width of the bounding box. The processor 930 according to an embodiment may align the plurality of patterns based on the size information. The processor 930 may cluster patterns starting from larger sizes among the aligned patterns according to the size information. For example, when the processor 930 aligns the patterns in size order based on the sum of the height and the width of the bounding box, the patterns may be aligned in the order of the pattern A, the pattern B, the pattern C, a pattern D, a pattern E, and a pattern F. The processor 930 may generate a cluster 1 including the pattern A, the pattern B, and the pattern C, and then generate a cluster 2 including the pattern D, the pattern E, and the pattern F. The sum of the height and the width of the bounding box of each of all patterns included in the cluster 1 may be greater than the sum of the height and the width of the bounding box of each of the patterns included in the cluster 2.

The processor 930 according to an embodiment may perform pattern nesting in a pattern arrangement order determined using a genetic algorithm for the plurality of patterns. However, as the number of patterns increases, the pattern nesting by genetic algorithms may have a possibility that the patterns are distributed at a large distance from each other within the fabric. Therefore, when the patterns that are the target of pattern nesting are clustered (or grouped) in size order and pattern nesting is performed in a cluster (or group) unit, the possibility that the patterns are distributed at a large distance within the fabric may be reduced. Accordingly, the area of the fabric wasted through pattern nesting may be reduced.

The processor 930 according to an embodiment may nest at least one pattern included in each of a plurality of clusters generated based on a result of the clustering into the fabric, based on the pattern pair and a genetic algorithm, in operation 130.

The processor 930 according to an embodiment may determine an arrangement order of patterns by using the genetic algorithm in a cluster unit. When there is a pattern pair among the patterns included in the cluster, the processor 930 may omit an arrangement position operation for patterns corresponding to the pattern pair. However, the processor 930 may calculate an optimal position for arranging the pattern to be arranged according to the arrangement order of the patterns based on previously arranged patterns.

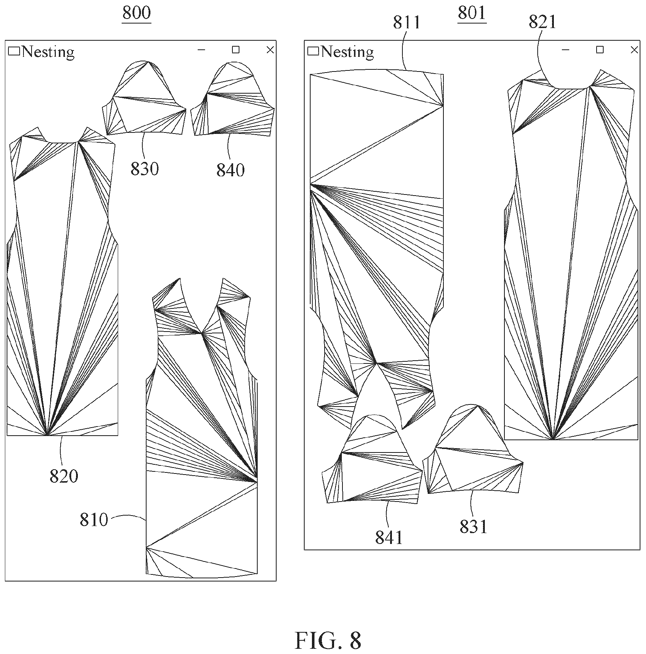

Among the patterns included in the cluster, there may be at least one pattern in which the position on the fabric is fixed. The processor 930 according to an embodiment may determine a pattern having a fixed position on the fabric, based on a user selection input. The processor 930 according to an embodiment may nest, on the fabric, at least one pattern in which the position is fixed on the fabric among the patterns included in one cluster among the plurality of clusters. For example, referring to FIG. 8, a position of a pattern 810 may be fixed. The processor 930 according to an embodiment may nest the remaining patterns on the fabric except for the at least one pattern in which the position is fixed in the cluster. For example, the processor 930 may arrange the remaining patterns 820, 830, and 840 in the pattern arrangement order, excluding the pattern 810. Since the size of the pattern 820 is greater than the sizes of the other patterns 830 and 840, the processor 930 may arrange the pattern 820 first.

The processor 930 according to an embodiment may align clusters in order of sizes of patterns included in the clusters among the plurality of clusters. The size of the patterns may be determined based on the size information of the patterns. Since the clusters are generated by clustering the patterns in order of sizes based on the size information of the patterns, the clusters may be aligned in order of sizes of the patterns included in the clusters. Accordingly, the processor 930 may determine the arrangement order of the patterns using the genetic algorithm starting from a cluster including patterns of large sizes, and may determine the arrangement position of the patterns according to the arrangement order. Subsequently, for the patterns included in a next large cluster, the arrangement order of the patterns may be determined using the genetic algorithm and the arrangement position of the patterns may be determined according to the arrangement order. Alternatively, the processor 930 according to an embodiment may determine the arrangement position of the patterns after determining all of the pattern arrangement orders for each cluster.

A processor 930 according to an embodiment may perform nesting in a cluster unit based on a result of the aligning and may nest at least one pattern included in a cluster in an area corresponding to the cluster. There may be an area allocated to each cluster in the fabric. In addition, the processor 930 may nest a pattern in an area corresponding to each cluster. Since a pattern may not be arranged exceeding the area corresponding to the cluster, the processor 930 may find an optimal solution for arranging the pattern within the area corresponding to the cluster.

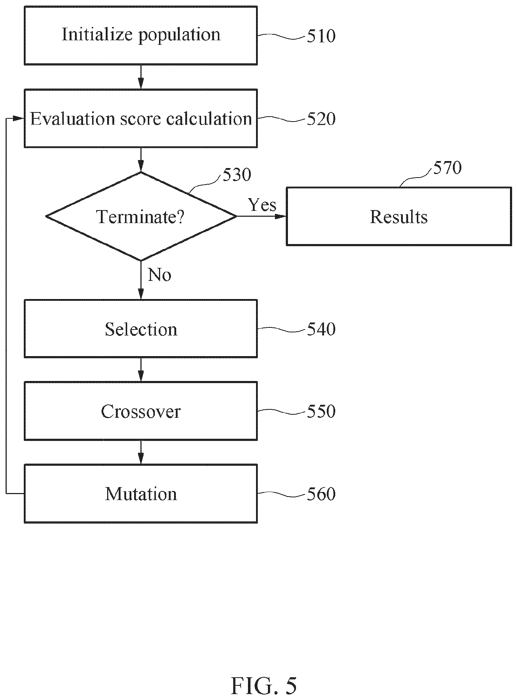

The genetic algorithm may include an algorithm of determining an order in which at least one pattern included in a cluster is arranged in an area corresponding to each of the plurality of clusters. A method of determining the arrangement order of patterns using the genetic algorithm is described in detail with reference to FIG. 5. The processor 930 may initialize population in operation 510. The processor 930 may obtain an arbitrary pattern arrangement order through initializing population in operation 510. For example, the processor 930 may generate a plurality of candidate pattern arrangement orders through initializing population in operation 510. In addition, the processor 930 may arrange the pattern on the fabric based on the obtained pattern arrangement order (or candidate pattern arrangement order). For example, the processor 930 may obtain a plurality of candidate pattern orders using the genetic algorithm for a specific cluster. Furthermore, the processor 930 may arrange the at least one pattern included in the cluster in the area corresponding to the cluster according to each of the candidate pattern arrangement orders.

The processor 930 according to an embodiment may generate candidate positions of the pattern to be arranged based on the plurality of candidate pattern arrangement orders generated by the genetic algorithm. In addition, the processor 930 may arrange the pattern to be arranged based on whether patterns overlap each other and a position determination standard among the candidate positions. In this process, the processor 930 may arrange the patterns according to the pattern arrangement order while checking whether the patterns overlap each other. For example, the processor 930 may check whether the patterns overlap using a nofit polygon (NFP) algorithm. The position determination standard may be a standard that minimizes the fabric to be wasted by arranging the arrangement target pattern at a specific candidate position. Accordingly, the processor 930 may arrange the arrangement target pattern at a candidate position in which the fabric to be wasted is minimized. For example, after arranging one pattern, the processor 930 may calculate a plurality of candidate positions in which a next pattern may be arranged according to the pattern arrangement order and then determine an optimal position among the corresponding candidate positions as the arrangement position.

When there is a plurality of patterns to be arranged, a lot of computations may be consumed in the process of arranging the patterns while determining whether the patterns overlap each other according to the candidate pattern arrangement order. Therefore, there may be a need to process a large amount of computations quickly. The processor 930 according to an embodiment may determine whether preprocessed patterns overlap each other. A preprocessed pattern may be a pattern with simplified mesh complexity to quickly determine whether the patterns overlap each other. As the mesh complexity decreases, the amount of computations required to determine whether the patterns overlap may be reduced.

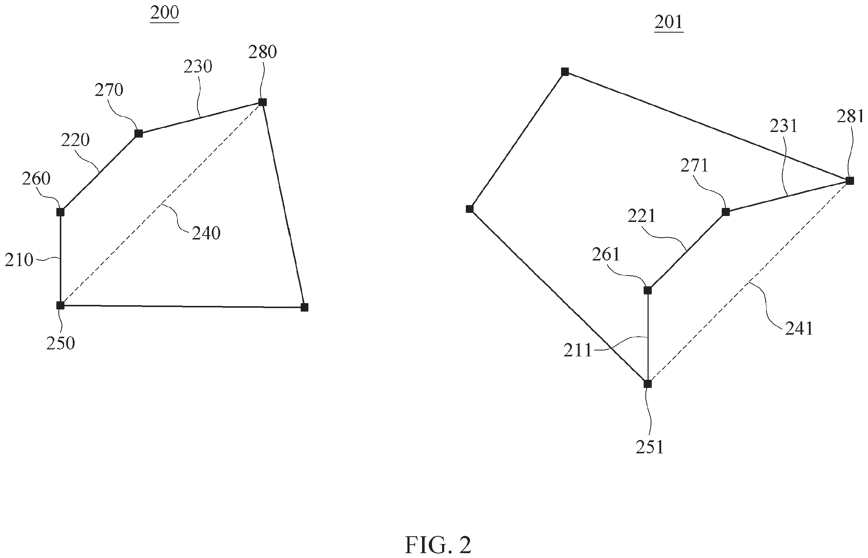

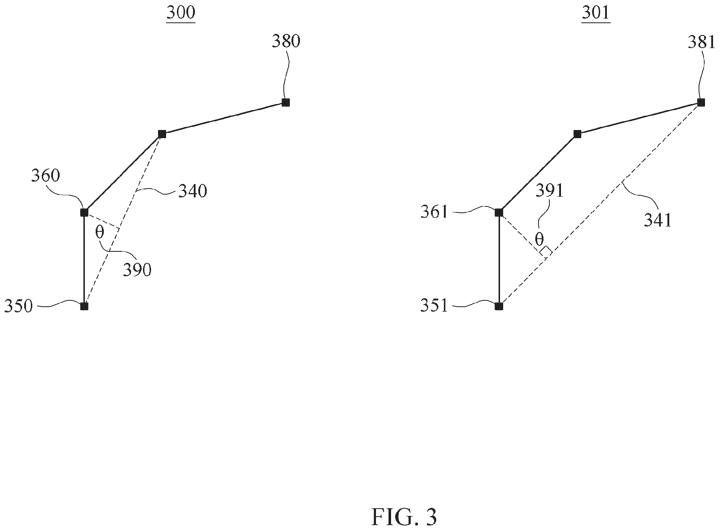

The processor 930 according to an embodiment may transform the outline of a pattern to generate the preprocessed pattern. A method of transforming the outline of a pattern is described in detail below with reference to FIGS. 2 and 3. Furthermore, the processor 930 may triangulate polygons included in the pattern in which the outline is transformed. The preprocessed pattern may be a triangulated pattern. Therefore, the processor 930 may determine whether the patterns overlap using a triangle-triangle intersection algorithm. Since the triangulated pattern includes triangles within the pattern, the processor 930 may determine whether the patterns overlap by determining whether there is overlap using the triangles included within the pattern. However, since calculating whether the patterns overlap using only the processor 930 may require a long time, the processor 930 may shorten the time required to determine whether there is overlap by additionally using an auxiliary processor 930. The auxiliary processor 930 is a device for receiving work from the processor 930 and performing calculations and may be, for example, a graphics processing unit (GPU) but is not limited thereto. The auxiliary processor 930 may determine whether the patterns overlap in a pixel unit. As an example and not a limitation, the auxiliary processor 930 may obtain a bitmap using off-screen rendering to determine whether the patterns overlap in the pixel unit. In addition, the auxiliary processor 930 (or the processor 930) may use a stencil buffer to limit a memory area used for rendering. An occlusion query may allow a user to check whether a virtual object is visible to a viewer or whether the object is obscured by another object and thus not visible to the viewer.

The processor 930 according to an embodiment may arrange a pattern to be arranged to use less area of fabric among the candidate positions. For example, when the processor 930 arranges a pattern to be arranged, the processor 930 may determine a candidate position in which "the length" of the fabric used is minimum as the final position. In another example, when a pattern to be arranged is arranged, the processor 930 may determine a candidate position in which "the width" of the fabric used is minimum as the final position.

When the processor 930 according to an embodiment arranges all patterns included in a cluster according to the candidate pattern arrangement order, an evaluation score corresponding to the candidate pattern arrangement order may be calculated in operation 520. The evaluation score may refer to a score for determining whether the amount of fabric wasted due to the patterns arranged on the fabric according to the candidate pattern arrangement order is minimized. The evaluation score may be inversely proportional to the length of one side of a bounding box including the patterns arranged on the fabric based on the candidate pattern arrangement order. For example, the processor 930 may calculate a higher evaluation score as "the length (height)" of the bounding box decreases. In another example, the processor 930 may calculate a higher evaluation score as "the width" of the bounding box decreases.

The processor 930 according to an embodiment may determine whether to terminate the genetic algorithm based on the evaluation score, in operation 530. When the evaluation score is above a certain standard, when a predetermined number of iterations of the genetic algorithm is exceeded, or when the evaluation score is the highest evaluation score, the processor 930 may terminate the genetic algorithm and may return a result in which the pattern is arranged on the fabric according to the candidate pattern arrangement order, in operation 570. When the evaluation score is below a certain standard, below a predetermined number of iterations of the genetic algorithm, or below the highest evaluation score, the processor 930 may continue the genetic algorithm. The processor 930 may perform selection in operation 540. The selection in operation 540 may refer to a process of selecting parents that mate and reunite to produce offspring for a next generation. For example, the selection in operation 540 may include at least one of roulette wheel selection, stochastic universal sampling (SUS), tournament selection, and rank selection. In addition, the processor 930 may perform crossover in operation 550. The crossover in operation 550 may refer to a method of crossing selected chromosomes. For example, the crossover in operation 550 may include at least one of one point crossover, multi point crossover, uniform crossover, cycle crossover, partially matched crossover, and cycle single point crossover. The processor 930 according to an embodiment may perform mutation in operation 560. The mutation in operation 560 may refer to a method of changing a gene value included in a chromosome. According to an embodiment, the processor 930 may perform operations 510 to 530 again based on the gene for which the crossover in operation 550 and the mutation in operation 560 have been completed.

FIG. 2 is a diagram illustrating a method of determining whether an outline of a pattern is transformed based on the amount of change in the pattern, according to an embodiment.

The processor 930 according to an embodiment may perform preprocessing for reducing mesh complexity of each of a plurality of patterns. The processor 930 may check whether the patterns overlap each other during a process of arranging the patterns on the fabric according to a pattern arrangement order. When determining whether there is overlap between patterns, as the mesh complexity of the patterns increases (for example, as the number of polygons included in the pattern increases), the amount of computations required to determine whether there is overlap may increase. Therefore, the processor 930 may need to simplify the patterns (e.g., reduce the number of vertices or edges included in a polygon) to determine whether the patterns overlap.

The processor 930 according to an embodiment may transform an outline of a pattern to reduce the mesh complexity. The processor 930 according to an embodiment may integrate a plurality of continuous outlines into a single line. For example, the processor 930 may integrate a plurality of outlines 211, 221, and 231 into a new outline 241. The processor 930 may reduce the mesh complexity by simplifying the pattern outline. For example, the processor 930 may determine a straight line connecting a point 250 to a point 280 in a polygon 200 as a new outline. In this case, the polygon in which the outline has been transformed may have lines 210, 220, and 230 and points 260 and 270 deleted. However, when the straight line connecting the point 250 to the vertex 280 is determined as the new outline, a pattern (e.g., the polygon 200) may become smaller due to the deformation of the outline. When the pattern becomes smaller, the processor 930 may determine whether to transform the outline of the pattern based on whether the amount of change in the pattern exceeds a threshold value. For example, when the amount of change in the pattern (e.g., the distance between the new outline and a vertex of the polygon, or the amount of change in an area of the pattern) does not exceed a threshold value, the processor 930 may determine the straight line connecting the point 250 to the vertex 280 as the new outline. However, when the amount of change in the pattern exceeds the threshold value, the processor 930 may not determine the new outline as the outline of the polygon.

There may also be a case where the pattern becomes larger due to the deformation of the outline of the pattern. For example, in a polygon 201, the processor 930 may determine a line connecting a point 251 to a point 281 as a new outline. In this case, a pattern (e.g., the polygon 201) may be increased. When the pattern becomes larger, the processor 930 may determine the line as the new outline to simplify the pattern, since increasing the size of the pattern does not affect the determination of whether the patterns overlap each other. For example, when the line connecting the point 251 to the point 281 is determined as the new outline, the polygon 201 may be simplified into a rectangle. In the simplified pattern, points 261 and 271 and the lines 211, 221, and 231 may be deleted.

FIG. 3 is a diagram illustrating a method of transforming an outline of a pattern, according to an embodiment.

When a pattern becomes smaller due to deformation of an outline, the processor 930 may need to determine whether the amount of change in the pattern exceeds a threshold value. This is because the processor 930 needs to simplify the patterns to a level that does not affect the accuracy of determining whether there is overlap between the patterns. When the size of the pattern is significantly reduced due to deformation of the outline, which affects the determination of whether the patterns overlap, the processor 930 may not use the simplified pattern to determine whether the patterns overlap.

The processor 930 according to an embodiment may calculate the amount of change in the pattern due to deformation of the outline. The amount of change in the pattern is the amount of change due to the deformation of the outline of the pattern, for example, the amount of change in a pattern area, a distance between a new outline and a vertex, etc. With reference to FIG. 3, the distance between a new outline and a vertex may be described. A line connecting a point 350 to a point 370 in a diagram 300 may be a new outline 340. The distance between the outline 340 and a point 360 may be the amount of change 390 in the pattern. The processor 930 may determine whether the amount of change 390 of the pattern exceeds a threshold value. If not, the processor 930 may generate a new outline with a greater amount of change in the pattern. For example, the processor 930 may generate a line connecting a point 351 to a point 381 in a diagram 301 as a new outline 341. The distance between the outline 341 and a point 361 may be the amount of change 391 in the pattern. When the amount of change 391 of the pattern exceeds the threshold value, the processor 930 may determine the previous outline 340 as the new outline of the pattern. However, when the amount of change 391 in the pattern does not exceed the threshold value, the processor 930 may generate a new outline to calculate the amount of change in the pattern and may determine whether the threshold value is exceeded. The processor 930 may repeat the above process to generate an optimal outline that simplifies the pattern without affecting the determination of whether the patterns overlap.

FIG. 4 is a diagram illustrating a method of generating a pattern pair, according to an embodiment. The method of generating a pattern pair is described in detail with reference to FIG. 1, so a detailed description thereof is omitted herein.

FIG. 5 is a diagram illustrating a pattern nesting method using a genetic algorithm, according to an embodiment. The pattern nesting method using a genetic algorithm is described in detail with reference to FIG. 1, so a detailed description thereof is omitted herein.

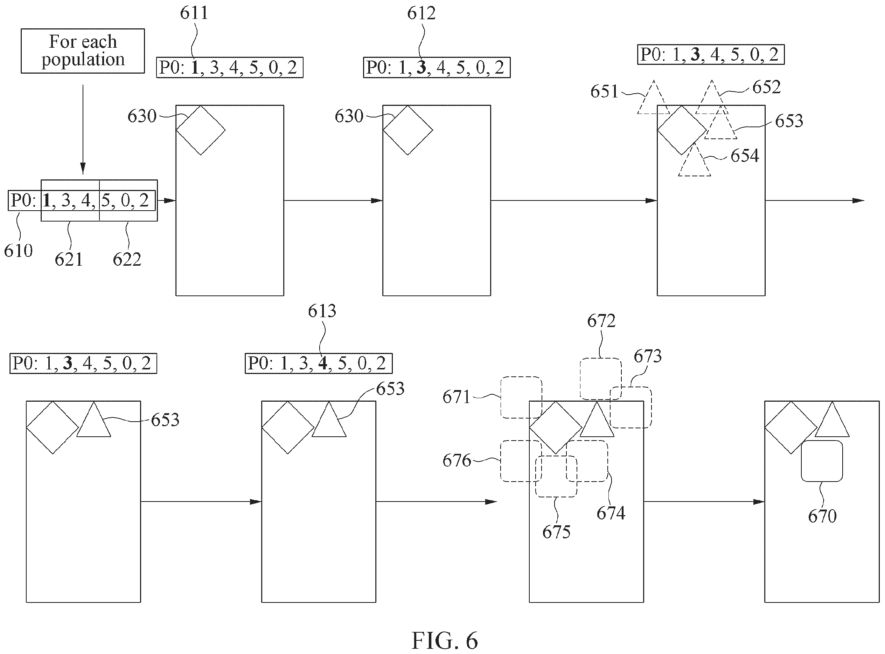

FIG. 6 is a diagram illustrating a pattern arrangement method according to an embodiment.

There may be an arrangement target pattern group 610 that includes a plurality of patterns that is a target of pattern nesting. The arrangement target pattern group 610 may include a pattern 1, a pattern 3, a pattern 4, a pattern 5, a pattern 0, and a pattern 2. The arrangement target pattern group may be divided into a plurality of clusters. For example, a cluster 1 621 may include the pattern 1, the pattern 3, and the pattern 4 and a cluster 2 622 may include the pattern 5, the pattern 0, and the pattern 3. The pattern arrangement order of the patterns included in the cluster may be determined based on a genetic algorithm. Accordingly, the processor 930 may arrange the patterns included in the cluster 1 621 in the order of the pattern 1, the pattern 3, and the pattern 4, according to the pattern arrangement order.

The processor 930 may arrange a pattern 1 611 on fabric at a position 630. **In** addition, the processor 930 may arrange a pattern 3 612 based on the pattern 1 611. The processor 930 may generate a plurality of candidate positions 651, 652, 653, and 654 based on the pattern 1 611. The processor 930 may pre-generate a pattern pair including a positional relationship between one pattern and another pattern. Therefore, when the processor 930 generates candidate positions, the processor 930 may generate selected candidate positions by using the positional relationship included in the pre-generated pattern pair.

According to an embodiment, the processor 930 may arrange the pattern 3 612 in a position that uses less area of the fabric while determining whether there is overlap between the patterns. When the processor 930 arranges the pattern at each of the candidate positions, if the pattern is arranged beyond the fabric or overlaps with an existing pattern, the processor 930 may not arrange the pattern at the candidate position. Furthermore, among the remaining candidate positions, the processor 930 may arrange the pattern at the position that uses the least area of the fabric. For example, a candidate position 653 may be a position that uses less area of the fabric. In this case, the processor 930 may arrange the pattern 3 612 at the candidate position 653. After the pattern 3 612 is arranged, the processor 930 may arrange a pattern 4 613. The processor 930 may calculate a candidate position by considering a relationship with at least one of previously arranged patterns in order to arrange a new pattern. For example, in order to arrange the pattern 4 613, the processor 930 may calculate a candidate position by considering the positional relationship between the pattern 4 613 and the pattern 1 611 and the pattern 3 612 that are previously arranged. The processor 930 may calculate candidate positions 671, 672, 673, 674, 675, and 676 of the pattern 4 613. Since the candidate positions 671, 672, 673, and 676 are outside the area of the fabric, the processor 930 may not arrange a pattern at the corresponding candidate positions. The pattern 4 613 may be arranged at the candidate position 674 that uses the least area of the fabric among the candidate positions 674 and 675. When arranging a pattern at the candidate position 675, the length of the fabric used becomes longer than that of the candidate position 674, so the processor 930 may arrange the pattern 4 613 at the candidate position 674.

Subsequently, the processor 930 may arrange the pattern 5, the pattern 0, and the pattern 3 included in the next cluster, which is the cluster 2 622, on the fabric. Based on the genetic algorithm, the pattern arrangement order may be determined as the pattern 5, the pattern 0, and the pattern 3. Accordingly, the processor 930 may determine the position of the pattern to be newly arranged by determining whether there is overlap between the patterns that are previously arranged and the pattern to be newly arranged. For example, the processor 930 may determine the arrangement position of the pattern 5 based on the positional relationship between the pattern 1 611 and the pattern 5, the positional relationship between the pattern 3 612 and the pattern 5, and the positional relationship between the pattern 4 613 and the pattern 5.

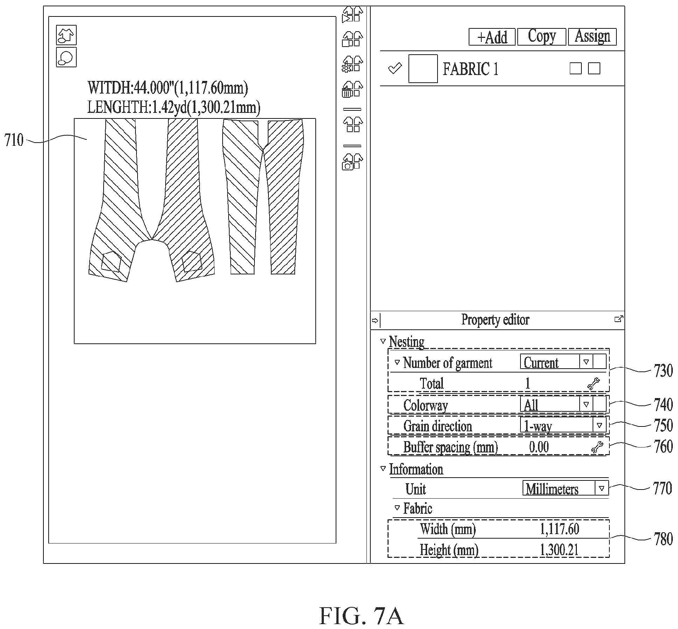

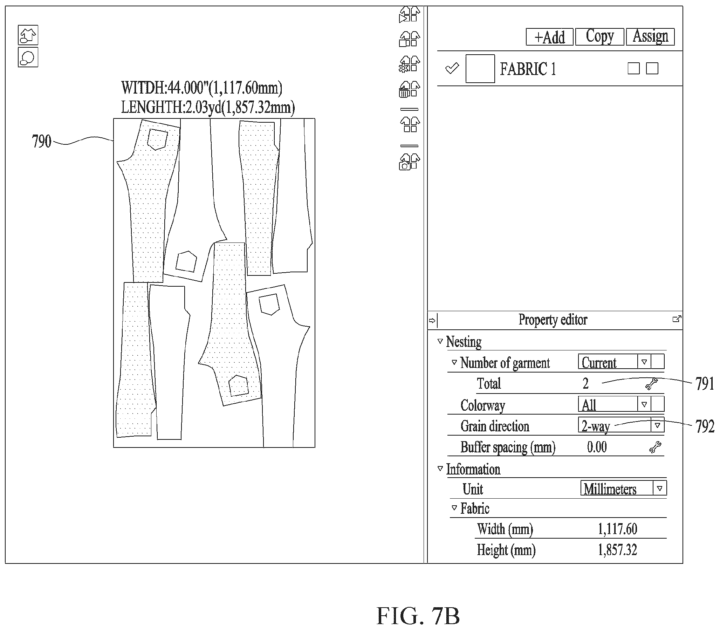

FIGS. 7A and 7B are diagrams illustrating a user interface screen for pattern nesting, according to an embodiment.

FIG. 7A may be a user interface screen for pattern nesting. The user interface screen may include a pattern nesting result window 710 and a parameter input window related to pattern nesting. The parameter input window related to pattern nesting may include the number of copied patterns 730, color 740, a selvage angle change pattern 750, a margin between patterns 760, a unit 770, and a fabric size 780. The input window is only an example and may include other parameters or some parameters may be omitted.

The number of copied patterns 730 may refer to the number of copies of the pattern. For example, when the number of copied patterns is one, only one pattern may be displayed in the pattern nesting result window 710. When the number of copied patterns is two, the copied patterns may be displayed one by one in the pattern nesting result window 710. The case where the number of copied patterns is two is shown in FIG. 7B. The number of copied patterns 791 shown in FIG. 7B is set to two. When the number of copied patterns is three, each of the two copied patterns may be displayed in the pattern nesting result window 710. Depending on the change in a value of the number of copied patterns 730, the processor 930 may perform optimal pattern nesting on the fabric, including the copied patterns. In addition the processor 930 may output the pattern nesting result to the pattern nesting result window 710.

The color 740 may be an object related to color setting of the pattern.

The selvage angle change pattern 750 may include whether to display the pattern for which a selvage angle is changed. When the selvage angle change pattern 750 is two, one pattern and another pattern in which a selvage angle of the one pattern is rotated by 180 degrees may be displayed in the pattern nesting result window 710. The case where the selvage angle change pattern 750 is two is shown in FIG. 7B. In FIG. 7B, the selvage angle change pattern 750 is shown as two. Depending on the change in a value of the selvage angle change pattern 750, the processor 930 may perform optimal pattern nesting on the fabric based on the pattern in which the selvage angle is changed. In addition the processor 930 may output the pattern nesting result to the pattern nesting result window 710.

The margin between patterns 760 may refer to the minimum space between nested patterns on the fabric.

The unit 770 may refer to a unit representing the length of the fabric.

The fabric size 780 may indicate horizontal and vertical lengths of the fabric.

FIG. 8 is a diagram illustrating a pattern nesting result according to a change in a selvage angle of a pattern, according to an embodiment.

The processor 930 according to an embodiment may generate candidate pattern arrangements by changing a selvage angle of at least one pattern, arranging the pattern on the fabric, and then arranging another pattern on the fabric. The processor 930 according to an embodiment may arrange the pattern by rotating the selvage angle of at least one pattern by 180 degrees. For example, the processor 930 may rotate the selvage angle of a pattern 820 by 180 degrees. The selvage angle may refer to an angle of rotation based on the longitudinal direction of the fabric. When the selvage angle of the pattern 820 is rotated 180 degrees, the pattern 820 may be arranged on the fabric like a pattern 821. Since the position of the pattern 820 has changed, the positions of other patterns 810, 830, and 840 arranged on a fabric 800 may need to be changed. Accordingly, the processor 930 may arrange other patterns like a fabric 801 according to the pattern 821. After arranging the pattern 821 on the fabric, the processor 930 may generate candidate pattern arrangements for arranging the other patterns 810, 830, and 840 on the fabric. In addition, the processor 930 may calculate an evaluation score corresponding to each of the candidate pattern arrangements. The processor 930 may determine final pattern nesting based on the evaluation score. For example, the processor 930 may arrange the patterns on the fabric 801 like the patterns 811, 831, and 841 according to the candidate pattern arrangement with the highest evaluation score.

In a process of the processor 930 performing clustering, there may be a pattern in which an arrangement position is predetermined. For example, the processor 930 may determine the arrangement position of a specific pattern on the fabric based on user input. In this case, the pattern with the fixed arrangement position may be excluded from clustering. Hereinafter, a method of performing clustering excluding patterns in which arrangement positions are predetermined is described. The processor 930 according to an embodiment may arrange at least one pattern having a fixed position on the fabric. For example, the processor 930 may arrange the pattern 810 with a fixed position on the fabric 800. The processor 930 according to an embodiment may cluster the patterns, excluding at least one pattern in which the position on the fabric is fixed. For example, the processor 930 may cluster the other patterns 820, 830, and 840 except for the pattern 810 in which the arrangement position is fixed. In addition, according to the clustering result, the processor 930 may perform pattern nesting for each cluster.

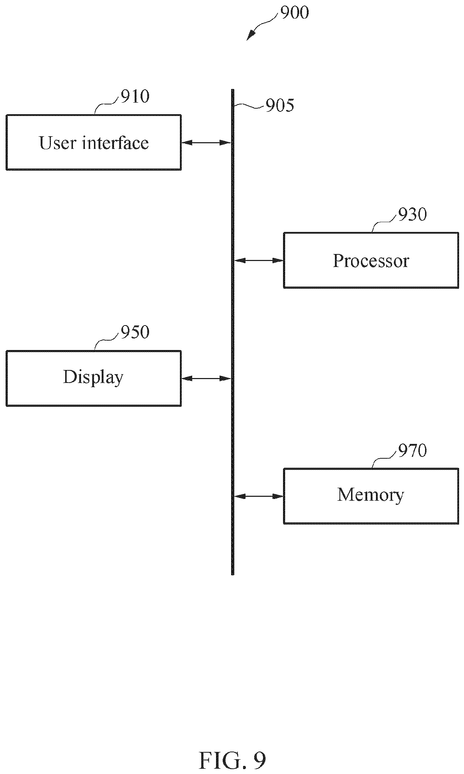

FIG. 9 is a block diagram illustrating a simulation device according to various embodiments.

According to an embodiment, a simulation device 900 may be a server. According to another embodiment, the simulation device 900 may be a user terminal (e.g., a mobile device, a desktop computer, a laptop computer, a personal computer, etc.). Referring to FIG. 9, according to an embodiment, the simulation device 900 may include a user interface 910, a processor 930, a display 950, and a memory 970. The user interface 910, the processor 930, the display 950, and the memory 970 may be connected to one another through a communication bus 905.

The user interface 910 may receive a user input for each of parameters related to pattern nesting.

The display 950 may display a pattern nesting result generated by the processor 930.

The memory 970 may store the generated pattern nesting result. In addition, the memory 970 may store various pieces of information generated by the process of the processor 930 described above. In addition, the memory 970 may store various pieces of data, programs, or the like. The memory 970 may include a volatile memory or a nonvolatile memory. The memory 970 may include a massive storage medium, such as a hard disk, and may store the various pieces of data.

In addition, the processor 930 may perform at least one method described with reference to FIGS. 1 to 8 or an algorithm corresponding to the at least one method. The processor 930 may be a data processing device implemented by hardware including a circuit having a physical structure to perform desired operations. For example, the desired operations may include code or instructions in a program. The processor 930 may be implemented as, for example, a central processing unit (CPU), a GPU, or a neural network processing unit (NPU). For example, the simulation device 900 that is implemented as hardware may include, for example, a microprocessor, a CPU, a processor core, a multicore processor, a multiprocessor, an application-specific integrated circuit (ASIC), and a field-programmable gate array (FPGA).

The processor 930 may execute a program and control the simulation device 900. The code of the program executed by the processor 930 may be stored in the memory 970.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs or DVDs; magnetooptical media such as optical discs; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, and/or rearranged or supplemented by other components or their equivalents.

Accordingly, other implementations are within the scope of the following claims.

## Claims

1. A pattern nesting method, comprising:
generating a pattern pair in which a positional relationship between at least two patterns of a plurality of patterns is determined such that relative positions of the at least two patterns satisfy a predetermined condition;
clustering, into a plurality of clusters, the plurality of patterns based on size information of each of the plurality of patterns; and
nesting, on fabric, at least one pattern in each of the plurality of clusters, based on the pattern pair and a genetic algorithm.

2. The pattern nesting method of claim 1, wherein the predetermined condition comprises a condition in which the at least two of the plurality of the patterns do not overlap and the plurality of the patterns are included in the fabric.

3. The pattern nesting method of claim 1, wherein the generating of the pattern pair comprises:
generating candidate positions of a second pattern with respect to a first pattern in the pattern pair;
calculating distances of the first pattern and the second pattern with respect to a position of the first pattern and the candidate positions of the second pattern;
determining one of the candidate positions of the second pattern having a minimum value among the calculated distances as a relative position with respect to the first pattern; and
generating the pattern pair with respect to the determined relative position of the second pattern.

4. The pattern nesting method of claim 1, wherein the size information comprises at least one of values of a sum of a height and a width of a bounding box of each of the patterns, and areas of a bounding box of each of the patterns.

5. The pattern nesting method of claim 1, wherein the clustering comprises:
aligning the plurality of patterns based on the size information; and
clustering the aligned patterns in a descending order of sizes according to the size information.

6. The pattern nesting method of claim 1, wherein the clustering comprises:
arranging, onto the fabric, at least one pattern having a fixed position on the fabric; and
clustering remaining patterns of the plurality of patterns other than the at least one pattern having a fixed position on the fabric.

7. The pattern nesting method of claim 1, wherein the nesting on the fabric comprises:
aligning the plurality of clusters in an order of sizes of patterns in each of the plurality of clusters; and
performing nesting in a cluster unit based on a result of the aligning and nesting the at least one pattern in a cluster in an area corresponding to the cluster.

8. The pattern nesting method of claim 1, wherein the genetic algorithm comprises an algorithm of determining an order in which the at least one pattern included in a cluster is arranged in an area corresponding to each of the plurality of clusters.

9. The pattern nesting method of claim 1, further comprising:
preprocessing for reducing mesh complexity of each of the plurality of patterns.

10. The pattern nesting method of claim 9, wherein the preprocessing for reducing the mesh complexity comprises:
transforming an outline corresponding to each of the patterns; and
triangulating polygons in a pattern with the outline transformed.

11. The pattern nesting method of claim 10, wherein the transforming of the outline comprises:
when a pattern becomes smaller due to the transforming of the outline, transforming the outline based on whether an amount of change in the pattern exceeds a threshold value.

12. The pattern nesting method of claim 10, wherein the transforming of the outline comprises:
when a plurality of continuous outlines is integrated into a line, determining the line as an outline based on whether an amount of change in an area of the pattern exceeds a threshold value.

13. The pattern nesting method of claim 1, wherein the nesting on the fabric comprises:
generating candidate positions of a pattern to be arranged based on a plurality of candidate pattern arrangement orders generated by the genetic algorithm;
arranging the pattern to be arranged, based on whether patterns overlap and a position determination standard among the candidate positions; and
calculating an evaluation score for each of the plurality of candidate pattern arrangement orders based on a result of the arrangement.

14. The pattern nesting method of claim 13, wherein whether the patterns overlap comprises at least one of:
whether preprocessed patterns determined by a processor overlap, wherein the preprocessed patterns include triangulated patterns; and
whether the patterns overlap each other that is determined based on a pixel unit using an auxiliary processor.

15. The pattern nesting method of claim 13, wherein the evaluation score is determined inversely proportional to a length of one side of a bounding box including patterns arranged on the fabric.

16. The pattern nesting method of claim 1, wherein the nesting on the fabric comprises:
after changing a selvage angle of at least one pattern to arrange the at least one pattern on the fabric, generating candidate pattern arrangements by arranging the patterns on the fabric; and
nesting on the fabric based on an evaluation score corresponding to each of the candidate pattern arrangements.

17. The pattern nesting method of claim 16, wherein the changing of the selvage angle of the at least one pattern comprises arranging by rotating the selvage angle of the at least one pattern by 180 degrees.

18. A non-transitory computer-readable storage medium storing instructions thereon, the instructions when executed by a processor cause the processor to:
generate a pattern pair in which a positional relationship between at least two patterns of a plurality of patterns is determined such that relative positions of the at least two patterns satisfy a predetermined condition;
cluster, into a plurality of clusters, the plurality of patterns based on size information of each of the plurality of patterns; and
nest, on fabric, at least one pattern in each of the plurality of clusters, based on the pattern pair and a genetic algorithm.

19. A simulation device for performing pattern nesting, the simulation device comprising:
a processor; and
memory storing instructions thereon, the instructions when executed by the processor cause the processor to:
generate a pattern pair in which a positional relationship between at least two patterns of a plurality of patterns is determined such that relative positions of the at least two patterns satisfy a predetermined condition,
cluster, into a plurality of clusters, the plurality of patterns based on size information of each of the plurality of patterns, and
nest, on fabric, at least one pattern in each of the plurality of clusters, based on the pattern pair and a genetic algorithm.
